## Europäisches Patentamt
## European Patent Office
## Office européen des brevets

(19)

(11) Publication number: **0 018 851**
**A1**

(12) # EUROPEAN PATENT APPLICATION

(21) Application number: **80301482.8**

(22) Date of filing: **07.05.80**

(51) Int. Cl.³: **F 16 B 2/24**
**F 16 B 5/06, F 16 B 7/04**
**B 65 D 19/28**

(30) Priority: **07.05.79 US 36888**

(43) Date of publication of application:
**12.11.80 Bulletin 80/23**

(84) Designated Contracting States:
**DE FR GB**

(71) Applicant: **EATON CORPORATION**
**100 Erieview Plaza**
**Cleveland Ohio 44114(US)**

(72) Inventor: **Macrae, Ralph Alexander**
**2129 Canterbury Drive**
**Burlington, Ontario(CA)**

(72) Inventor: **Crammond, James**
**15 Nelligan Place**
**Hamilton, Ontario(CA)**

(74) Representative: **Slight, Geoffrey Charles et al,**
**Graham Watt & Co. Riverhead**
**Sevenoaks Kent TN13 2BN(GB)**

(54) **Clip.**

(57) A one-piece spring steel clip (46) for joining, in overlying fashion, a first panel (12) having a first elongated slot (18) therein to a second panel (14) having an elongated slot (42) adjacent and parallel to an edge (44) such that a strip (52) of substantially constant width is defined between said slot and said edge is provided. The clip (46) will join the members in overlying relationship whereby the joint formed is substantially rigid in the direction along the axis of the slots and is substantially rigid with a predetermined degree of resilient axial freedom in the direction transverse the axis of the slots.

EP 0 018 851 A1

Fig. 2

-1-

CLIP

This invention relates to one-piece spring steel fasteners, or clips, for joining two panels in overlying relation, and to the joint formed thereby, and in particular relates to one-piece spring steel clips for joining a first panel having an elongated slot therein to an overlaying second panel having either a pair of parallelly extending elongated slots therein or an elongated slot extending parallel to and adjacent an edge whereby a strip of substantially constant width is defined between said parallel slots or said slot and said edge to form a joint which is substantially rigid along the axis of the slots and is substantially rigid with a predetermined degree of resilient freedom in the direction transverse to the axis of the slot.

Earlier means for fastening overlying panels, such as metallic members of a pallet or the like, in an overlying relationship have included permanent attachment as by welding or adhesives which are not totally satisfactory as the assembly created thereby could not be disassembled and/or easily assembled in the field, and the joint created thereby tended to be excessively rigid without any flexibility and thus the panels and/or the joint tended to fracture when same was subjected to shock loads or jolts or the like.

Another method of fastening overlying panels involved the use of threaded fasteners. This method was not always totally satisfactory as both a male and a female threaded fastener element was required, precise alignments were required, and/or excessive assembly time was required. The joints formed by said fastening method also tended to be excessively rigid causing failure of the fasteners and/or the panels when the joints were subjected to shock loads or the like.

Another method for joining two overlying panels involved the use of prior art spring steel fasteners. While this method was attractive in many circumstances, in certain circumstances wherein a relatively high degree of rigidity was required in one or more directions, the joint formed utilizing prior art fasteners tended to be excessively flexible.

In accordance with the present invention, many of the drawbacks of the prior art have been minimized or overcome by means of a one-piece sheet metal, such as spring steel, clip which is adapted for joining two overlying panels to form a joint that is substantially rigid in one direction and is substantially rigid in the transverse direction with a predetermined degree of resilient freedom. One of the panels is provided with an elongated slot and the other panel is provided with either a pair of parallelly extending elongated slots or a single elongated slot adjacent to and parallel to an edge of said panel. The joint formed by the clip and the two panels is substantially rigid along the axis of the slots and is substantially rigid in the direction transverse the axis of the slots with a predetermined degree of resilient freedom. The clip is a one-piece spring steel stamping and is quickly installed and may be provided with means to self lockingly join the two panels.

The clip is preferably formed from a strip of sheet metal, preferably spring steel, and is elongated in elevation. The clip is generally U-shaped in a cross section taken at either end thereof and includes a loop

-3-

like body formed by two substantially parallel side walls joined by an arcuate bight portion. A flange extends outwardly from the end of each side wall most distant the bight portion and it includes an inwardly bent portion, or jaw, at the end thereof. In an alternate embodiment, a lead-in ramp extends from each jaw portion for ease in assembling the clip to the other panel. Each side wall defines a cantilevered ramp portion formed therefrom and spaced inwardly from the ends of the side walls. The ramps diverge outwardly from the bight portion and then turn inwardly toward the flange portion to define a panel engaging shoulder. Preferably, the panel engaging shoulders are spaced from the outwardly extending flange portions by a distance somewhat greater than the thickness of the first panel member. A locking tab may be provided on the ramp portions adjacent the shoulders thereof. The length of the loop portion is preferably substantially equal to the length of the single slot in the first panel while the distance between the side walls, in the assembled configuration of the clip, is somewhat less than the width of the portion of the slot in the first panel engaging the sidewalls and the distance between the shoulders is somewhat greater than the width of the portion of the slot in the first panel engaging the ramps. The length of the flanges is substantially equal to at least the length of the one slot in the second panel and preferably the slots and the loop and the flange portions are all of substantially equal length.

In operation, the clip is assembled to the second panel, i.e., that panel having a pair of parallelly extending elongated slots or a single elongated slot extending adjacent and parallel to an edge, by resiliently entrapping the strip of the second panel between the two parallel slots or the strip of the second panel between the parallel slot and edge between the inwardly turned flange portions, or jaws, of the

-4-

clip. In this position, the loop portion of the clip is substantially rigid in the direction of the axis of the slot as the length of the slot is substantially equal to the length of the clip and the distance between the side walls of the loop portion can not be substantially reduced as the strip of the second panel entrapped between the inward return flange portions will prevent the side walls from moving together. The slot in the first panel member is then aligned with and inserted over the loop portion and pushed toward the flange portion causing the ramps to resiliently move inwardly until the shoulders pass through the slot and then resiliently expand outwardly whereby the shoulders and/or the locking tab will prevent removal of the first panel from the second panel. A degree of resilient freedom will be provided in the direction transverse the axis of the slots as the side edges of the slot may move in a direction transverse the axis of the slot by resiliently deforming the ramps until the edges of the slot engage the substantially rigid side walls of the loop portion of the clip.

Embodiments of the invention will now be described, by way of example, with reference to the accompanying drawings, in which

FIG. 1 is a perspective view of a single deck steel pallet utilizing a clip of the present invention;

FIG. 2 is a close up exploded view of the assembly of a stringer and a deck element in the pallet structure of FIG. 1;

FIG. 3 is a sectional view taken on the line 3-3 of FIG. 2 in a disassembled position;

FIG. 4 is the same sectional view as FIG. 3 but in an assembled position.

FIG. 5 is a perspective view of the clip;

FIG. 6 is an enlarged elevational view of the clip of FIG. 5;

FIG. 7 is a side view of the clip of FIG. 6;

FIG. 8 is a bottom view of the clip of FIG. 6;

FIG. 9 is a sectional view of an alternate partial assembly utilizing the clip;

FIG. 10 is a side view of an alternate embodiment of the clip; and

FIG. 11 is an exploded view of a pallet employing the alternate clip of FIG. 10.

Certain terminology will be used in the following description for convenience and reference only, and will not be limiting. The words "top", "bottom", "inwardly", and "outwardly" will refer respectively to the clip and the assemblies as shown in the figures. Said terminology will include the words above specifically mentioned, derivatives thereof, and words of similar import.

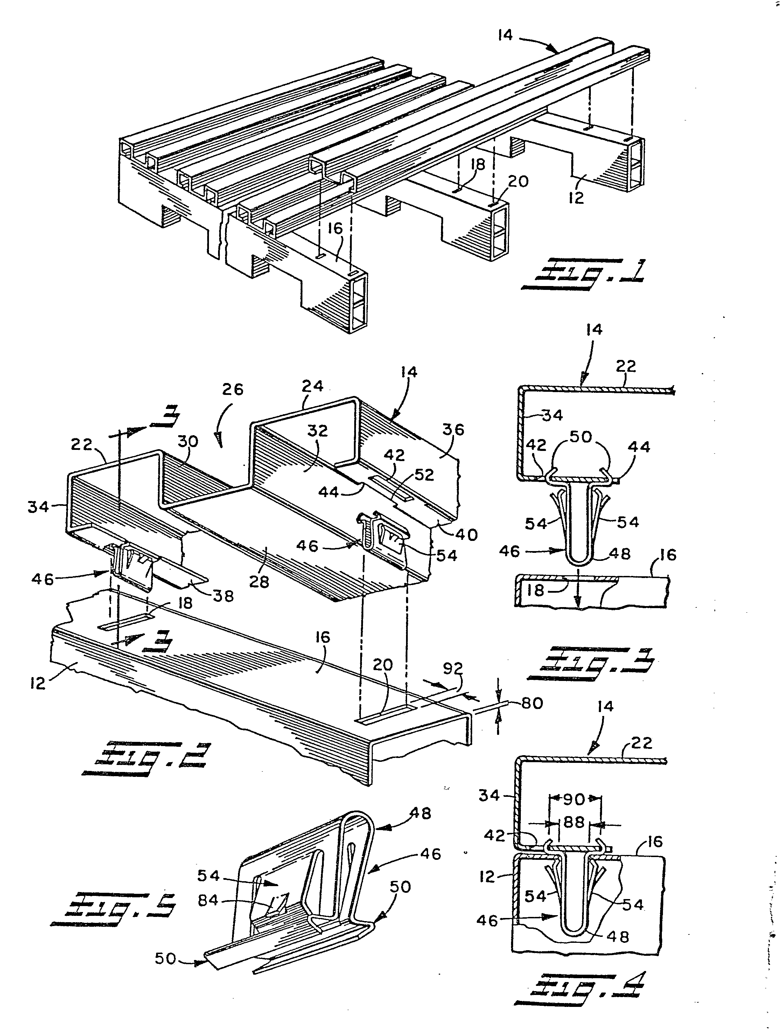

The clips of the present invention, and the joint formed thereby, are illustrated in the embodiment of a single-deck pallet but it will be clear to those skilled in the art that the principles of construction and interlocking arrangement may be applied to other assemblies whereby a pair of overlying panels are to be assembled. Referring firstly to Figs. 1 to 9 of the drawings, a pallet 10 constructed of light gauge steel, preferably corrosion resistant steel, for example, galvanized steel, includes three elongated members or stringer elements 12 and a plurality of deck-forming elongate roll-formed elements 14 joined to the upper surface 16 of the stringer elements 12 at each intersection thereof and spaced apart in relation to each other and generally perpendicular to the stringer elements 12. The deck-forming elements 14 co-operate to provide a load-carrying deck on the top side of the pallet 10. The stringer elements 12 may be formed by welding together roll-formed parts as is known in the prior art.

In the illustrated embodiment, a single-deck pallet is shown but it will be clear to those skilled in the art that the principles of construction and the interlocking arrangement may be applied to other pallet forms and/or other types of assemblies.

At each intersection of the stringer elements 12 and a panel or surface of the deck-forming elements 14, the stringer elements 12 are provided with an elongated slot, 18 or 20, formed in the upper surface of panel 16 of the stringer element.

The deck-forming elements 14 have a generally castellated structure which includes first and second elongate parallel co-planar elements 22 and 24 which are joined by an integral member defining a channel 26 therebetween and including an elongate portion 28 situated in a plane parallel to the co-planar element 22 and 24 and adapted to engage the upper surface 16 of the stringer element 12, and first and second upright elements 30 and

-7-

32 integrally joining the elongate portion 28 and the
co-planar element 22 and 24. The deck-forming elements 14
also include integral skirt portions 34 and 36 depending
from the co-planar element 22 and 24 respectively,
generally perpendicularly thereto at the sides of the
deck-forming member 14 for a distance substantially equal
to the depth of the channel 26. The castellated structure
described and illustrated for the deck-forming element 14
represents a preferred structure for steel parts owing to
the ease of roll-forming that structure. However, if
desired, the deck-forming elements 14 may have a wholly
planar top surface with one or more webs depending
therefrom into engagement with the surface 16 of the
stringer element 12, such as is described in U.S. Patent
No. 4,077,334.

At the lower end of each skirt portion 34 and 36
are integrally formed flanges 38 and 40, respectively, the
flanges extending the length of the skirt portions and
being inwardly-directed co-planarly with the elongate
portion 28. The inwardly-directed flanges, 38 and 40,
define the panels for engagement with the upper surface,
or panel, 16 of the stringer element.

At each intersection with a stringer element 12,
the panels defined by flanges 38 and 40 are provided with
an elongated slot 42 and a parallel cut away notch 44. As
will be described in more detail below, the parallel cut
away notch 44 could be replaced with a second parallel
elongated slot or the cut away notch 44 could be
eliminated and the slot 42 moved closer the edge of the
flange 38 or 40. The slot 42 and notch 44 are provided to
receive portions of a unitary clip element 46 for purposes
of mounting the same on the deck-forming elements 14.

-8-

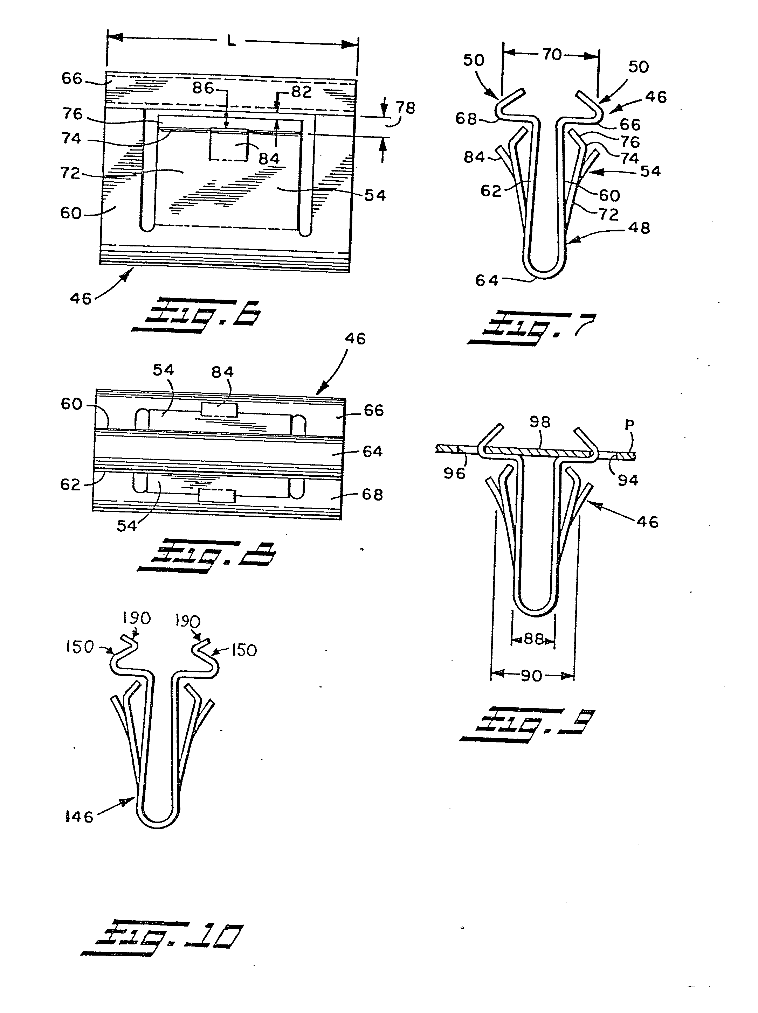

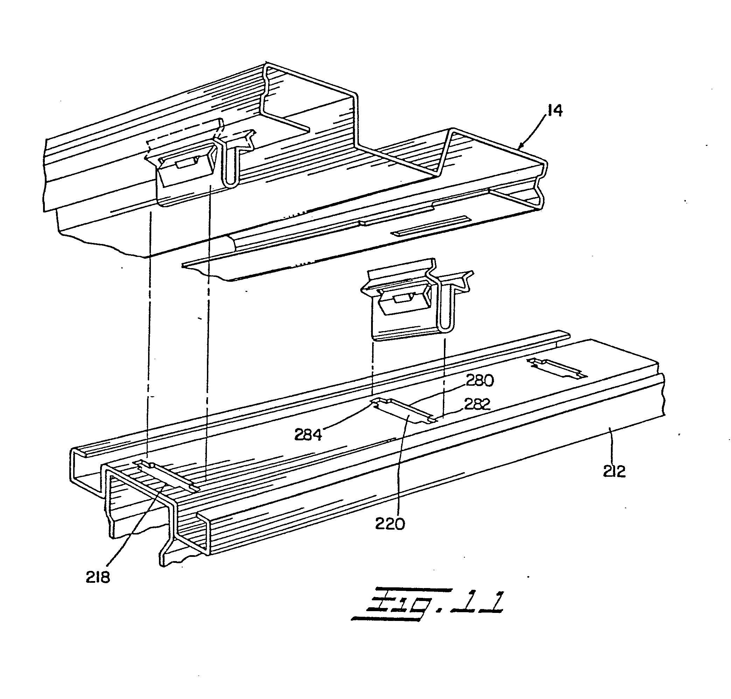

As may be seen particularly from FIGS. 3 and 5, the clip 46, constructed from a suitable resilient material, such as, preferably spring steel, has a generally U-shaped body 48, a pair of oppositely-facing jaws 50 located at the upper extremities of the body 48 for gripping the elongate metal strip 52 between the slot 42 and the cut away notch 44 to hold the clip element 46 to the flange element 38 or 40. The strip 52 is of a substantially constant width.

The arms or sidewalls of the U-shaped body 48 converge toward the upper end of the clip element when the clip element is in its rest or non deformed position as seen in FIG. 5, but are generally parallel to each other when mounted to the flanges 38 and 40 to add to the resiliency of the grip mounting of the clip element 46 on the deck-forming element 14.

The arms of the U-shaped body 48 are each provided with cantilevered wing, or ramp element, 54, which diverges outwardly and then turns inwardly and terminates at an upper end in an inwardly directed portion. The structural and functional details of the clip 46 will be discussed in greater detail below.

As may be seen from comparison of FIGS. 3 and 4, assembly of the stringer element 12 and the deck-forming element 14 at each intersection of the pallet is achieved by inserting the lower U-bend portion of the body member 48 of the clip member 46 into the respective elongated slot 18 or 20 in the stringer element 12, pushing the deck-forming element 14 down so that the side edges of the slot 18 or 20 engage the wings or ramp elements 54 resiliently forcing them inwardly toward the remainder of the body portion 48 until the side edges of the opening 18 or 20 clear the shoulder portion of the ramp element 54, which then resiliently snaps back to its original position (see FIG. 4) preventing removal of the clip member 46 from the respective opening 18 or 20. The wing or ramp member 54 may be provided with a locking tab 84 or the like to permanently mount a stringer member to a deck member.

-9-

The interengagement of the clips 46 with the slots 18 and 20 not only results in a sturdy assembly but also prevents longitudinal movement of the deck-forming elements 14 transverse to the stringer element 12. Further, the interengagement of the clips 46 with the slots 18 and 20 allows a predetermined degree of resilient freedom of the deck element relative to the stringer element 12 in the direction of the axis of the stringer elements 12 but prevents such movement beyond the point when the side walls of the slots 18 or 20 engage the body portion 48 of the clip 46. The assembly so provided is superior to assemblies heretofor available as the deck elements 14 have a limited degree of resilient longitudinal freedom allowing them to resiliently absorb shock loads in that direction to prevent fracturing and damage to the elements while still providing a relatively rigid assembly in both the longitudinal and transverse directions.

The clip 46 may be seen in a perspective view by reference to FIG. 5 and in elevation side and bottom views by reference to FIGS. 6, 7, and 8, respectively. The clip 46 is preferably formed from a strip of spring steel having suitable material characteristics as is well known in the art. The clip 46 has a length L which is substantially equal to the length of the slots 18, 20, and 42 and the length of the notch 44, with which it is intended to cooperate. Clip 46 has a generally U-shaped body 48 comprising a pair of side walls 60 and 62 which are joined by a generally arcuate bight portion 64, and a pair of oppositely facing jaws 50 formed by outwardly extending flanges 66 and 68 which are inwardly bent at the outer extremities thereof. In the at rest, or non-resiliently deformed, position of the clip 46, as may be seen by reference to FIG. 7, the side walls 60 and 62 converge toward the upper end of the clip element and the distance 70 between the oppositely facing jaw portions 50 is less than the width of the strip 52

-10-

between the slot 42 and the cut away notch 44 of the flange 40 of the deck member 14 in which the fastener will be resiliently retained. Of course, should a pair of parallel elongate slots or a single elongate slot parallel to the edge of a flange or panel member be utilized to retain the fastener 46, the same dimensional relationships will apply. As may be seen by reference to FIGS. 3 or 4, when the clip 46 is mounted to the flange 40 so that the jaws resiliently engage the elongate strip 52 therebetween, the side walls 60 and 62 will be substantially parallel and will be rigidly restrained from movement toward one another.

A cantilevered wing, or ramp member 54 is cut out from each side wall portion. Each ramp member 54 includes a first portion 72 which diverges outwardly from the body from the bight portion toward the flange portion and terminates at an outer extremity or shoulder 74 and a second portion, 76, which turns inwardly toward the body portion from the shoulder 74 toward the flange 66 or 68. The distance 78 between the shoulder 74 of the ramp 54 and the upper surface of the flanges 66 or 68 is preferably somewhat greater than the thickness 80 of the upper surface 16 of the stringer element 12. The distance 82 between the free ends of the ramp member 54 and the upper surfaces of the flanges, 66 or 68, is somewhat less than the thickness 80 of the upper surface 16 of the stringer element 12. Thus, as may be seen by reference to FIG. 4, when the stringer element 12 is assembled to the deck element 14 utilizing the clip 46, the upper surface 16 of the stringer element 12 will be retained between the second portion 76 of the clip 46 and the flanges 66 or 68 of the clip 46. If required, a cantilevered locking tab 84 may be formed from the ramp portions adjacent the shoulders 74 thereof. Preferably, the distance 86 between the free ends of the locking tab 84 and the upper surfaces of the flanges 66 or 68, will be substantially equal to the thickness 80 of the upper

- 11 -

surface 16 of stringer 12 to provide a self-locking
engagement of stringer 12 to deck-element 14, as the
free ends of the locking tabs engage the bottom wall
of surface or panel 16 of the stringer 12.

As may be seen by reference to FIG. 4, the transverse
distance 88 between the side walls of the clip 46, when
the clip is assembled to deck member 14, is substantially
"rigid" (fixed) while the transverse distance 90 between
the shoulders 74 of the ramp members is relatively
"resilient" (variable). Preferably, the width 92 of the
slots 18 or 20 is greater than the distance 88 but less
than the distance 90. Thus, in the assembled position,
deck element 14 may move transversely relative to stringer
12 with a certain degree of resilient freedom until the
side edges of slot 18 or 20 engage the side walls 60 or 62
of the clip 46 at which point further transverse movement
will be prevented.

An alternate mounting of the clip 46 of the present
invention may be seen by reference to FIG. 9. In this
embodiment, the clip 46 is mounted in a panel P which is
provided with a pair of parallelly extending elongated slots
94 and 96 defining an elongated strip 98 therebetween having
a width substantially equal to the width of the elongated
slot 52 discussed above. In all other respects, the clip 46
and the joint to be formed thereby is substantially identical
to the clip 46 described above. A similar modification is
possible utilizing a panel having an elongated slot extending
substantially parallelly to the edge of the panel and
defining an elongated strip therebetween.

An alternate embodiment 146 of the clip of the present
invention may be seen by reference to FIG. 10. Clip 146 is
substantially identical to clip 46 described above except
for the provision of lead-in elements, or ramps, 190, which
extend outwardly from jaws 150. Lead-in ramps 190 will
allow clip 146 to be assembled to a panel P (as shown in FIG.
9) by simply placing the lead-in ramps 190 against slots 94
and 96 and then upwardly urging the clip 146 towards the
panel P to resiliently separate the inturned jaws 150.

-12-

An alternate embodiment of the pallet may be seen by reference to FIG. 11. The pallet illustrated in FIG. 11 is substantially identical to that illustrated in FIG. 2 except that the elongated slots 218 and 220 in stringer element 212 comprises an enlarged width section 280 interposed between reduced width sections 282 and 284. The width of the enlarged width section 280 is greater than distance 90. The width of the reduced width sections 282 and 284 is generally equal to distance 88. The length of enlarged width section 280 is generally equal to the length of the ramp members 54.

CLAIMS.

1. A one-piece sheet metal clip (46) for joining, in overlying fashion, a first panel (12) having a first elongated slot (20) therein to a second panel (14) having an elongated second slot (42) therein adjacent and parallel to an edge (44) of the panel (14) such that a strip (52) of substantially constant width is defined between said second slot (42) and said edge (44), the first and second slots being of substantially the same length, characterised in that the clip is adapted to join the panels (12, 14) in overlying relationship whereby the joint formed is substantially rigid in the direction along the axis of the slots (20, 42) and is substantially rigid with a predetermined degree of resilient axial freedom in the direction transverse the axis of the slots (20, 42).

2. A clip as claimed in claim 1 characterised in that it includes a generally U-shaped body (48) taken in cross-section at either end thereof, said body (48) being of a length (L) generally equal to the length of said slots (20, 42), that the body is defined by a pair of side walls (60, 62) joined by a bight portion (64) at one end thereof and each having an outwardly extending flange (66, 68) which is turned inwardly at the free end thereof to define a pair of inwardly facing jaw members (50) extending from the other ends thereof, said jaw members (50) being separated by a distance (70) less than the width of said strip (52) in the non resiliently deformed state of said clip, and when said clip is mounted to said second panel (14) with said strip (52) resiliently retained between said jaws (50), that a cantilevered ramp member (54) is formed from each of said side walls (60, 62) and spaced inwardly from the ends of said side walls, said ramp members (54) each including a first portion (72) extending outwardly from said bight portion (64) to a shoulder (74) and a second portion (76) extending inwardly from said shoulder (74) towards said flanges (66, 68), the distance (78) between said shoulders (74) and said flanges (66, 68) greater than the thickness (80) of said first panel (12), said first panel (12) being retained between said second portions (76) and said flanges (66, 68), the distance between said side walls (60, 62) being less than the width (92) of said first slot (20) and the distance between said shoulders (74) being greater than the width of said first slot (20) when said strip (52) is resiliently retained between said jaw-members (50) in use of the clip (46).

3.  A clip as claimed in claim 2, characterised in that at least one of said ramp members (54) includes a locking tab (84) formed therefrom, said locking tab (84) being cantilevered from said ramp member (54) and extending outwardly from said first portion (72) beyond said shoulder (74), the free end of said locking tab (84) engaging the side of the first panel (12) most distant from said second panel (14) in use of the clip (46).

4.  A clip as claimed in claim 2, characterised in that at least one of said ramp members (54) includes a locking tab (8 formed therefrom, said locking tab (84) being cantilevered from said ramp members (54) and extending outwardly from said first portion (72) beyond said shoulder (74), the free end of said locking tab (84) being spaced from said flange (66, 68) by a distance (86) at least as great as the thickness (80) of said first panel (12).

5.  A clip as claimed in any one of claims 2 to 4, characterised in that said side walls (60, 62) converge inwardly toward said flanges (66, 68) in the non deformed condition of said clip (46) and are generally parallel when said jaw members (50) are separated by a distance equal to the width of said strip (52).

6.  A clip as claimed in any one of claims 2 to 4, characterised in that said first slot (220) comprises a relatively larger width section (280) for engaging said ramp members (54) interposed between two relatively smaller width sections (282, 284) for engaging said side walls (60, 62), the length of said relatively larger width section (28( generally equal to the length of said ramp members (54).

7. A clip as claimed in claim 1, characterised in that it includes a generally U-shaped body (48) taken in cross-section at either end thereof, said body (48) being of a length (L) generally equal to the length of said slots, said body (48) being defined by a pair of side walls (60, 62) joined by a bight portion (64) at one end thereof and each having an outwardly extending flange (66, 68) which is turned inwardly at the free end thereof to define a pair of inwardly facing jaw members (50) extending from the other ends thereof, the jaw members (50) being separated by a distance (70) less than the width of said strip (52) in the non resiliently deformed position of said clip (46), that a cantilevered ramp member (54) formed from each of said side walls (60, 62) and spaced inwardly from the ends of said side walls, said ramp members (54) each including a first portion (72) extending outwardly from said bight portion (64) to a shoulder (74) and a second portion (76) extending inwardly from said shoulder (74) towards said flanges (66, 68) the distance (78) between said shoulders (74) and said flanges (66, 68) being greater than the thickness (80) of said first panel (12), that when said jaw members (50) are separated by a distance equal to the width of said strip (52) the distance between said side walls (60, 62) is less than the width of the portion of said first slot (20) engaged by said side walls (60, 62) and the distance between said shoulders (74) is greater than the width of the portion of said first slot (20) engaged by said ramp members(54).

8. A clip as claimed in any one of the preceding claims manufactured of spring steel.

9. A clip as claimed in any one of claims 2 to 7, characterised in that the inwardly facing jaw members (150) are provided with outwardly extending lead-in elements (190).

0018851

Fig.1

Fig.2

Fig.3

Fig.4

Fig.5

Fig. 6

Fig. 7

Fig. 8

Fig. 9

Fig. 10

001885

Fig.11

**European Patent Office**

## EUROPEAN SEARCH REPORT

Application number

EP 80301482.8

| | DOCUMENTS CONSIDERED TO BE RELEVANT | | |
|---|---|---|---|
| Category | Citation of document with indication, where appropriate, of relevant passages | Relevant to claim | |
| P,X | DE - A1 - 2 915 460 (EXTRADOS CO. LTD.)<br><br>+ Totality +<br><br>-- | 1-9 | |
| X | DE - A1 - 2 648 467 (SPRINGFIX-BEFESTIGUNGSTECHNIK GMBH)<br><br>+ Totality +<br><br>-- | 1,2,5,<br>7,8 | |
| - | DE - A - 1 575 257 (FA. A.RAYMOND)<br><br>+ Totality +<br><br>-- | 1,2,7 | |
| - | FR - A - 1 413 744 (FA. A.RAYMOND)<br><br>+ Totality +<br><br>-- | 1,2,7 | |
| - | DE - B - 1 157 434 (F.T. PRODUCTS LTD.)<br><br>+ Totality +<br><br>-- | 1,2,7 | |
| - | GB - A - 1 181 157 (LEWIS SPRING PRODUCTS LIMITED)<br><br>+ Totality +<br><br>-- | 1,2,7,<br>8 | |
| - | GB - A - 1 358 914 (GERALD JOSEPH FREY)<br><br>+ Totality +<br><br>-- | 2,5,7 | |
| - | GB - A - 1 507 990 (ARMSTRONG CORK COMPANY)<br><br>+ Totality +<br><br>-- | 1,2,7 | |
| A | DE - A1 - 2 433 806 (FA. ROBERT THOMAS)<br><br>+ Totality +<br><br>-- | 1 | |

**CLASSIFICATION OF THE APPLICATION (Int. Cl. ³)**

F 16 B 2/24
F 16 B 5/06
F 16 B 7/04
B 65 D 19/28

**TECHNICAL FIELDS SEARCHED (Int.Cl. ³)**

F 16 B 2/00
F 16 B 5/00
F 16 B 7/00
F 16 B 12/00
F 16 B 21/00
B 65 D 19/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| VIENNA | 16-07-1980 | SCHUGANICH |

EPO Form 1503.1 06.78

European Patent
Office

**EUROPEAN SEARCH REPORT**

Application number

EP 80301482.8

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| – | DE - A - 1 475 048 (JANKOWSKI JOHANNES)<br><br>+ Totality +<br><br>---- | 1,2,7, 8 | |
| | | | **TECHNICAL FIELDS SEARCHED (Int. Cl.³)** |

EPO Form 1503.2  06.78